# FASCICULE DE BREVET EUROPEEN

(11) **EP 0 715 945 B1**
(45) Date de publication et mention de la délivrance du brevet: **03.05.2000**
(21) Numéro de dépôt: 95402775.1
(22) Date de dépôt: 11.12.1995
(51) Int. Cl.: B29D 11/00, B29C 39/24

(54) **Procédé pour le remplissage d'un moule destiné à l'obtention d'une lentille optique**
Verfahren zur Füllung einer Giessform für die Herstellung einer optischen Linse
Method for filling a mould for obtaining an optic lens

(30) Priorité: 12.12.1994 FR 9414926
(43) Date de publication de la demande: 12.06.1996
(73) Titulaire: ESSILOR INTERNATIONAL Compagnie Générale d'Optique, F-94220 Charenton le Pont (FR)
(72) Inventeur: Magne, Jean-François, F-94000 Creteil (FR)
(74) Mandataire: CABINET BONNET-THIRION

(56) Documents cités:
- EP-A- 0 226 377
- EP-A- 0 318 164
- EP-A- 0 409 656
- DE-A- 3 813 576
- FR-A- 925 673
- GB-A- 2 177 342
- US-A- 3 136 000

## Description

La présente invention concerne d'une manière générale le moulage des lentilles optiques en matière synthétique polymérisable, et elle vise plus particulièrement, mais non nécessairement exclusivement, celui des lentilles ophtalmiques.

Traditionnellement, ce moulage se fait à l'aide d'un moule formé de deux coquilles de moulage à la périphérie desquelles est établi annulairement un élément de fermeture définissant avec elles la cavité de moulage recherchée.

Par exemple, et c'est le cas lorsque les deux coquilles de moulage sont en verre et ont des faces sensiblement parallèles, l'élément de fermeture est un joint dans lequel ces coquilles de moulage s'emboîtent ou un manchon qui les entoure.

En variante, et c'est le cas lorsque, comme décrit par exemple dans le brevet américain No 5 110 514, les coquilles de moulage sont plus ou moins massives, l'élément de fermeture est d'un seul tenant avec l'une et/ou l'autre de ces coquilles de moulage.

Quoi qu'il en soit, pour le remplissage d'un moule ainsi constitué de deux coquilles de moulage et d'un élément de fermeture, il est traditionnellement procédé par coulée, la matière à mouler étant introduite dans la cavité de moulage à la faveur d'une ouverture, dite ici par simple commodité ouverture de coulée, qui est dûment prévue à cet effet, et qui, en pratique, est ménagée dans l'élément de fermeture, à la périphérie des coquilles de moulage, pour ne pas interférer avec la zone optiquement utile de la lentille optique formée.

Dans un processus manuel, les coquilles de moulage peuvent se trouver plus ou moins à plat, en s'étendant globalement horizontalement, lorsqu'il est procédé à une telle coulée.

Mais, dans un processus au moins en partie automatisé, suivant lequel le moule à remplir est présenté à l'aplomb d'un dispositif de remplissage apte à lui délivrer par une buse une dose déterminée de matière à mouler, les coquilles de moulage sont au contraire disposées de chant, en s'étendant globalement verticalement, et cela est le cas, également, pour des raisons particulières, dans le brevet américain No 5 110 514 déjà mentionné ci-dessus.

Lorsque les coquilles de moulage sont ainsi disposées de chant, le remplissage du moule se fait par le haut, seule intervenant la gravité.

L'expérience montre que sauf à adopter des dispositions particulières, imposant, notamment, un temps de latence relativement important, de l'ordre par exemple de deux heures, entre le remplissage et l'initialisation de la polymérisation, les lentilles optiques obtenues dans ces conditions sont fréquemment l'objet de défauts optiques locaux plus ou moins importants, conduisant à des taux de rebut relativement élevés.

La présente invention est fondée sur l'observation, a priori surprenante, que ces défauts optiques peuvent dans une grande mesure être évités si, en allant à l'encontre du processus qui paraît le plus naturel pour bénéficier de la gravité, le moule est rempli par le bas.

Une explication peut peut-être en être trouvée dans le fait que, avec un remplissage par le haut, intervient inévitablement, au moins dans une certaine mesure, l'effet de "sirop" bien connu des verriers : eu égard à sa viscosité, la matière à mouler s'écoule lentement, en traînées, dans la cavité de moulage, sans que le processus soit bien maîtrisé, et, eu égard, conjointement, au fait que cette matière à mouler est un mélange de constituants susceptibles de présenter des indices de réfraction et/ou des coefficients de viscosité différents, il peut en résulter, par cisaillage ou étirement, l'apparition de gradients d'indices locaux relativement importants, qui, si la polymérisation intervient trop rapidement après le remplissage, ne manquent pas de conduire aux défauts optiques constatés.

Un temps de latence important entre le remplissage et l'initialisation de la polymérisation est dès lors nécessaire à une bonne homogénéisation de l'ensemble, pour éviter les défauts optiques.

Quoi qu'il en soit, la présente invention a pour objet un procédé pour le remplissage d'un moule qui, destiné à l'obtention d'une lentille optique, est formé de deux coquilles de moulage disposées de chant et à la périphérie desquelles est établi annulairement un élément de fermeture définissant avec elles la cavité de moulage recherchée, ce procédé étant du genre suivant lequel la matière à mouler est introduite dans la cavité de moulage à la faveur d'une ouverture de coulée ménagée à cet effet dans l'élément de fermeture et étant d'une manière générale caractérisé en ce que on dispose l'ouverture de coulée à la partie basse de la cavité de moulage, et, préférentiellement, au point le plus bas de celle-ci.

Il suffit, conjointement, dans ce cas, pour vaincre la gravité, de mettre en oeuvre des moyens de pompage propres à assurer la circulation de la matière à mouler sans cependant mettre réellement celle-ci sous pression.

Grâce à un tel procédé, il est avantageusement possible d'assurer l'initialisation de la polymérisation immédiatement après le remplissage, au bénéfice de la productivité, et, la matière à mouler restant homogène lors du remplissage, les lentilles optiques obtenues sont avantageusement dépourvues de défaut optique susceptible de conduire à leur rebut, au bénéfice du coût global de l'ensemble.

Si, dans certaines formes de mise en oeuvre décrites dans le brevet américain No 5 110 514 pour les dispositions particulières faisant l'objet de celui-ci, il est procédé à un remplissage par le bas du moule concerné, il ne s'agit pas d'un moule destiné à l'obtention d'une lentille optique et comportant deux coquilles de moulage disposées de chant.

A l'inverse, dans tous les cas où le moule est destiné à l'obtention d'une lentille optique, le remplissage s'y fait de manière traditionnelle par le haut, que les coquilles de moulage correspondantes soient disposées de chant ou qu'elles soient disposées à plat.

Rien ne suggère, donc, dans ce brevet américain, et au contraire, de remplir par le bas un moule destiné à l'obtention d'une lentille optique et comportant des coquilles de moulage disposées de chant.

Les caractéristiques et avantages de l'invention ressortiront d'ailleurs de la description qui va suivre, à titre d'exemple, en référence aux dessins schématiques annexés sur lesquels :
la figure 1 est, avec un arrachement local, une vue en perspective illustrant le remplissage par le bas, suivant l'invention, d'un moule destiné à l'obtention d'une lentille optique ;
la figure 2 est une vue en coupe transversale de ce moule, suivant la ligne II-II de la figure 1 ;
la figure 3 est une vue en perspective illustrant un autre mode de mise en oeuvre de l'invention.

Tel qu'illustré sur ces figures, il s'agit, globalement, d'assurer le remplissage d'un moule 10 qui, destiné à l'obtention d'une lentille optique, et par exemple d'une lentille ophtalmique, est formé de deux coquilles de moulage 11A, 11B disposées de chant et à la périphérie desquelles est établi annulairement un élément de fermeture 12 définissant avec elles la cavité de moulage 13 recherchée.

Dans les modes de mise en oeuvre représentés, les coquilles de moulage 11A, 11B sont supposées, à titre d'exemple, être des coquilles de moulage en verre.

Ces coquilles de moulage 11A, 11B se présentent en pratique sous la forme de palets de contour périphérique globalement circulaire, mais il n'en est pas nécessairement toujours ainsi.

Leurs surfaces internes en regard sont, en négatif, à l'image des surfaces recherchées pour la lentille optique à mouler.

Il s'agit, en pratique, de surfaces coaxiales, d'axe A.

Les coquilles de moulage 11A, 11B étant disposées de chant, cet axe A est sensiblement horizontal, les coquilles de moulage 11A, 11B étant, elles, sensiblement verticales.

Dans le mode de mise en oeuvre plus particulièrement représenté sur les figues 1 et 2, on a choisi comme élément de fermeture 12 un manchon qui entoure les coquilles de moulage 11A, 11B en étant en prise avec celles-ci par leur tranche.

Ce manchon peut par exemple être réalisé à l'aide d'une bande que l'on vient enrouler sur la tranche des coquilles de moulage 11A, 11B.

Cette bande peut elle-même être par exemple en matière synthétique adhésive ou en matière synthétique thermorétractable.

Quoi qu'il en soit, pour l'introduction de la matière à mouler dans la cavité de moulage 13, il est prévu, dans l'élément de fermeture 12, une ouverture de coulée 14.

Il s'agit en pratique d'un simple trou.

Suivant l'invention, on dispose cette ouverture de coulée 14 à la partie basse de la cavité de moulage 13, et, préférentiellement, au point le plus bas de celle-ci.

Corollairement, pour le remplissage de la cavité de moulage 13, on met en oeuvre des moyens de pompage 15.

Préférentiellement, ces moyens de pompage 15 sont choisis de manière à assurer une alimentation continue de la cavité de moulage 13 en matière à mouler.

Par alimentation continue on entend ici une alimentation dépourvue de tout à-coup.

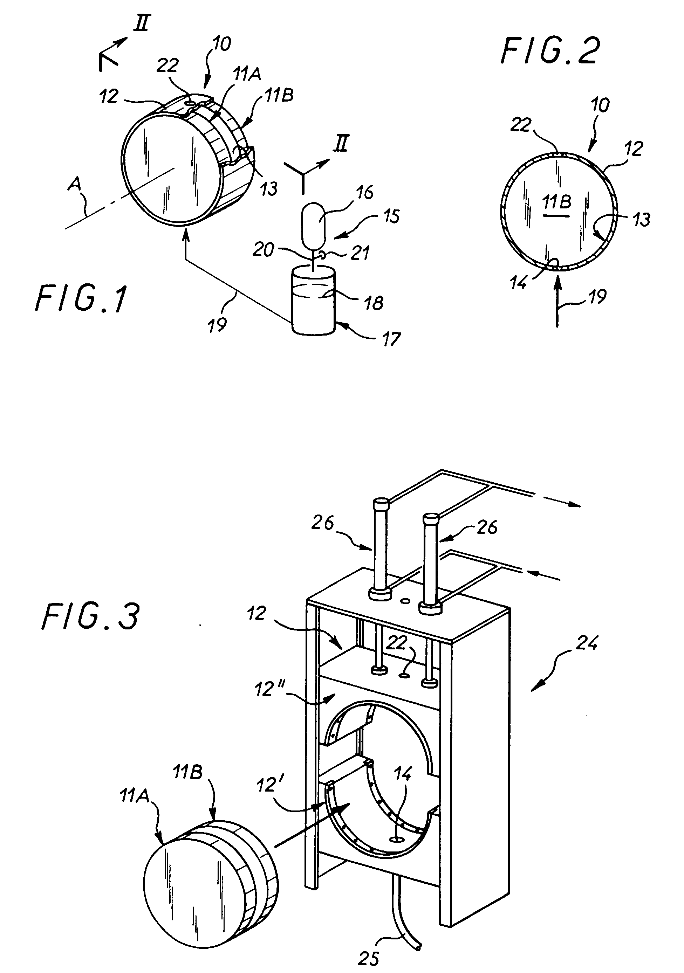

Dans le mode de mise en oeuvre représenté sur les figures 1 et 2, les moyens de pompage 15 comportent une source de pression 16 disposée en amont d'un réservoir 17 qui, formant nourrice, contient la matière à mouler 18, et qui, par une canalisation 19, est apte à être relié, par simple application, à la manière d'une buse, à l'ouverture de coulée 14 desservant la cavité de moulage 13.

Par exemple, la source de pression 16 est un réservoir d'air comprimé qui, par une canalisation 20 contrôlée par une vanne 21, est reliée au réservoir 17, au-dessus de la matière à mouler 18 contenue dans celui-ci.

Il suffit d'ouvrir plus ou moins la vanne 21 pour avoir le débit recherché pour la matière à mouler 18 et assurer un remplissage progressif, par le bas, de la cavité de moulage 13, et, donc, du moule 10.

Conjointement, et tel que représenté, un évent 22 est préférentiellement prévu à la partie haute de la cavité de moulage 13, et, par exemple, au point le plus haut de celle-ci.

La matière à mouler 18 peut, au choix, être une composition au moins en partie polymérisable par insolation, et, par exemple, par rayonnement ultraviolet, ou être une composition au moins en partie polymérisable à la chaleur, ou, encore, être une composition qui est à la fois polymérisable par insolation et polymérisable à la chaleur.

Dans le mode de mise en oeuvre plus particulièrement représenté sur la figure 3, on a choisi pour élément de fermeture 12 un élément de fermeture formé de deux mors 12', 12", qui, portés par un bâti 24 commun à l'ensemble, sont aptes à enserrer conjointement, par leur tranche, les coquilles de moulage 11A, 11B, en présentant chacun à cet effet intérieurement un contour hémicirculaire, et dont l'un au moins est mobile par rapport à l'autre, pour permettre l'insertion entre eux de ces coquilles de moulage 11A, 11B.

Par exemple, et tel que représenté, le mors 12' inférieur est un mors fixe, et il présente l'ouverture de coulée 14 à laquelle est reliée une canalisation 25.

Corollairement, le mors 12" supérieur est un mors mobile, en étant pour ce faire monté coulissant dans le bâti 24 sous le contrôle de vérins 26, et il présente l'évent 22.

Les dispositions correspondantes ne relevant pas, par elles-mêmes, de la présente invention, elles ne seront pas décrites plus en détail ici.

En variante, on peut choisir comme élément de fermeture 12 un joint de type usuel, c'est-à-dire un joint dans lequel s'emboîtent les coquilles de moulage 11A, 11B.

En variante, également, on peut choisir comme élément de fermeture 12 un élément de fermeture qui est au moins en partie d'un seul tenant avec l'une et/ou l'autre des coquilles de moulage 11A, 11B, tel que cela est par exemple le cas dans certaines formes de mise en oeuvre décrites dans le brevet américain No 5 110 514.

La présente invention ne se limite d'ailleurs pas aux formes de mise en oeuvre décrites et représentées, mais englobe toute variante d'exécution contenue dans le cadre des revendications.

## Revendications

1. Procédé pour le remplissage d'un moule (10) qui, destiné à l'obtention d'une lentille optique, est formé de deux coquilles de moulage (11A, 11B) disposées de chant et à la périphérie desquelles est établi annulairement un élément de fermeture (12) définissant avec elles la cavité de moulage (13) recherchée, procédé du genre suivant lequel la matière à mouler (18) est introduite dans la cavité de moulage (13) à la faveur d'une ouverture de coulée (14) ménagée à cet effet dans l'élément de fermeture (12) et on dispose l'ouverture de coulée (14) à la partie basse de la cavité de moulage (13).

2. Procédé suivant la revendication 1, dans lequel on dispose l'ouverture de coulée (14) au point le plus bas de la cavité de moulage (13).

3. Procédé suivant l'une quelconque des revendications 1, 2, dans lequel, pour le remplissage de la cavité de moulage (13), on met en oeuvre des moyens de pompage (15).

4. Procédé suivant la revendication 3, dans lequel les moyens de pompage (15) sont choisis de manière à assurer une alimentation continue de la cavité de moulage (13) en matière à mouler (18).

5. Procédé suivant la revendication 4, dans lequel les moyens de pompage (15) comportent une source de pression (16) disposée en amont d'un réservoir (17) contenant la matière à mouler (18).

6. Procédé suivant l'une quelconque des revendications 1 à 5, dans lequel on choisit pour matière à mouler (18) une composition qui est au moins en partie polymérisable par insolation.

7. Procédé suivant l'une quelconque des revendications 1 à 5, dans lequel on choisit pour matière à mouler (18) une composition qui est au moins en partie polymérisable à la chaleur.

8. Procédé suivant l'une quelconque des revendications 1 à 5, dans lequel on choisit pour matière à mouler (18) une composition qui est à la fois polymérisable par insolation et polymérisable à la chaleur.

9. Procédé suivant l'une quelconque des revendications 1 à 8, dans lequel on choisit comme élément de fermeture (12) un manchon qui entoure les coquilles de moulage (11A, 11B).

10. Procédé suivant l'une quelconque des revendications 1 à 8, dans lequel on choisit comme élément de fermeture (12) un élément de fermeture formé de deux mors (12', 12"), dont l'un au moins est mobile par rapport à l'autre, et qui sont aptes à enserrer conjointement les coquilles de moulage (11A, 11B).

11. Procédé suivant l'une quelconque des revendications 1 à 8, dans lequel on choisit comme élément de fermeture (12) un joint dans lequel s'emboîtent les coquilles de moulage (11A, 11B).

12. Procédé suivant l'une quelconque des revendications 1 à 8, dans lequel on choisit comme élément de fermeture (12) un élément de fermeture qui est au moins en partie d'un seul tenant avec l'une et/ou l'autre des coquilles de moulage (11A, 11B).

## Claims

1. Method for filling a mould (10) which is intended for obtaining an optical lens, and is formed by two mould shells (11A, 11B) arranged edgewise, and on the periphery of which there is provided in an annular manner a closure element (12) defining with said shells the mould cavity (13) desired, the method being of the type according to which the material to be moulded (18) is introduced into the mould cavity (13) by virtue of a pouring aperture (14) provided for this purpose in the closure element (12), and the pouring aperture (14) is arranged on the lower part of the mould cavity (13).

2. Method according to claim 1, wherein the pouring aperture (14) is arranged at the lowest point of the mould cavity (13).

3. Method according to any one of claims 1, 2, wherein pumping means (15) are employed for the filling of the mould cavity (13).

4. Method according to claim 3, wherein the pumping means (15) are selected such as to provide the mould cavity (13) with a continuous supply.

5. Method according to claim 4, wherein the pumping means (15) include a pressure source (16) arranged upstream of a reservoir (17) containing the material to be moulded.

6. Method according to any one of claims 1 to 5, wherein a composition which is at least in part polymerisable by insolation is selected as the material to be moulded (18).

7. Method according to any one of claims 1 to 5, wherein a composition which is at least in part heat-polymerisable is selected as the material to be moulded (18).

8. Method according to any one of claims 1 to 5, wherein a composition which is both polymerisable by insolation and heat-polymerisable is selected as the material to be moulded (18).

9. Method according to any one of claims 1 to 8, wherein a sleeve which surrounds the mould shells (11A, 11B) is selected as the closure element (12).

10. Method according any one of claims 1 to 8, wherein a closure element formed by two jaws (12', 12"), at least one of which is moveable with respect to the other, and which are capable of jointly locking the mould shells (11A, 11B) is selected as the closure element (12).

11. Method according to any one of claims 1 to 8, wherein a joint into which the mould shells (11A, 11B) fit is selected as the closure element (12).

12. Method according to any one of claims 1 to 8, wherein a closure element which is at least in part in one piece with one and/or the other of the mould shells (11A, 11B) is selected as the closure element (12).

## Patentansprüche

1. Verfahren zum Füllen einer zum Darstellen einer optischen Linse vorgesehenen Form (10), die aus zwei Formkoquillen (11A, 11B) gebildet ist, welche hochkant angeordnet sind und an deren Peripherie ringförmig ein Verschlußelement (12) ausgebildet ist, welches mit diesen den gewünschten Formhohlraum (13) definiert, wobei das Verfahren von dem Typ ist, bei welchem das zu formende Material (18) in den Formhohlraum (13) mittels einer Einlauföffnung (14) eingeführt wird, welche zu diesem Zweck in dem Verschlußelement (12) ausgebildet ist, wobei man die Einlauföffnung (14) an dem unteren Abschnitt des Formhohlraumes (13) anordnet.

2. Verfahren nach Anspruch 1, bei welchem man die Einlauföffnung (14) an dem niedrigsten Punkt des Formhohlraums (13) anordnet.

3. Verfahren nach einem der Ansprüche 1, 2, bei welchem man zum Füllen des Formhohlraums (13) Pumpmittel (15) verwendet.

4. Verfahren nach Anspruch 3, bei welchem die Pumpmittel (15) in solch einer Weise gewählt sind, daß eine kontinuierliche Versorgung des Formhohlraums (13) mit zu formendem Material (18) gesichert ist.

5. Verfahren nach Anspruch 4, bei welchem die Pumpmittel (15) eine Druckquelle (16) umfassen, die flußaufwärts liegend eines Reservoirs (17) angeordnet ist, welches das zu formende Material (18) enthält.

6. Verfahren nach einem der Ansprüche 1 bis 5, bei welchem man für das zu formende Material (18) eine Zusammensetzung wählt, welche zumindest teilweise mittels Bestrahlung oder Insolation polymerisierbar ist.

7. Verfahren nach einem der Ansprüche 1 bis 5, bei welchem man als zu formendes Material (18) eine Zusammensetzung wählt, welche zumindest teilweise mittels Wärme polymerisierbar ist.

8. Verfahren nach einem der Ansprüche 1 bis 5, bei welchem man als zu formendes Material (18) eine Zusammensetzung wählt, welche sowohl durch Bestrahlung oder Insolation als auch durch Wärme polymerisierbar ist.

9. Verfahren nach einem der Ansprüche 1 bis 8, bei welchem man als Verschlußelement (12) eine Manschette wählt, welche die Form- oder Gußkoquillen (11A, 11B) umgibt.

10. Verfahren nach einem der Ansprüche 1 bis 8, bei welchem man als Verschlußelement (12) ein Verschlußelement wählt, welches aus zwei Backen (12', 12") gebildet ist, von denen zumindest eine beweglich mit Bezug auf die andere ist und welche in der Lage sind, gemeinsam die Form- oder Gußkoquillen (11A, 11B) einzuspannen.

11. Verfahren nach einem der Ansprüche 1 bis 8, bei welchem man als Verschlußelement (12) eine Dichtung wählt, in welche die Form- oder Gußkoquillen (11A, 11B) eingreifen.

12. Verfahren nach einem der Ansprüche 1 bis 8, bei welchem man als Verschlußelement (12) ein Verschlußelement wählt, welches zumindest teilweise einstückig ausgebildet ist mit der einen und/oder anderen der Form- oder Gußkoquillen (11A, 11B).
